# FASCICULE DE BREVET EUROPEEN

(11) **EP 3 408 647 B1**
(45) Date de publication et mention de la délivrance du brevet: **06.11.2019**
(21) Numéro de dépôt: 17706287.4
(22) Date de dépôt: 24.01.2017
(51) Int. Cl.: G01N 21/17, E21B 49/10, G01M 3/04, G02B 6/02, E21B 47/10, G01N 21/27, G01N 21/90

(54) **DISPOSITIF DISTRIBUÉ DE DÉTECTION D'UNE SUBSTANCE**
VERTEILTE VORRICHTUNG ZUR DETEKTION EINER SUBSTANZ
DISTRIBUTED DEVICE FOR THE DETECTION OF A SUBSTANCE

(30) Priorité: 26.01.2016 FR 1650602
(43) Date de publication de la demande: 05.12.2018
(73) Titulaire: Commissariat à l'Energie Atomique et aux Energies Alternatives, 75015 Paris (FR)
(72) Inventeur: CINA, Salvatore, 38500 Coublevie (FR); MOUREY, Bruno, 38500 Coublevie (FR)
(74) Mandataire: Cabinet Beaumont
(86) Numéro de dépôt international: PCT/FR2017/050151
(87) Numéro de publication internationale: WO 2017/129893

(56) Documents cités:
- GB-A- 2 522 266
- US-A1- 2011 026 031
- US-A1- 2014 180 070
- US-B1- 6 535 667
- YINGCHUN CAO ET AL: "Evanescent-wave photoacoustic spectroscopy with optical micro/nano fibers", OPTICS LETTERS, OPTICAL SOCIETY OF AMERICA, US, vol. 37, no. 2, 15 janvier 2012 (2012-01-15), pages 214-216, XP001572686, ISSN: 0146-9592, DOI: 10.1364/OL.37.000214 [extrait le 2012-01-12]
- Ofs: "Oil and Gas Distributed Acoustic Sensing - OFS", , 24 mars 2015 (2015-03-24), XP055303326, Extrait de l'Internet: URL:http://web.archive.org/web/20150324234 246/http://www.ofsoptics.com/oil-gas-distr ibuted-acoustic-sensing.html [extrait le 2016-09-16]

## Description

La présente demande de brevet revendique la priorité de la demande de brevet français FR16/50602.

### Domaine

La présente demande concerne un dispositif distribué permettant de détecter la présence d'une substance dans une zone étendue. Elle vise par exemple un dispositif distribué adapté à la détection de certaines substances corrosives telles que le dioxyde de carbone (CO₂) ou le sulfure d'hydrogène (H₂S) dans des installations d'extraction pétrolière. Elle vise également un dispositif distribué adapté à la détection de fuites d'hydrocarbures dans des oléoducs enterrés. Elle ne se limite toutefois pas à ces domaines applicatifs particuliers.

### Exposé de l'art antérieur

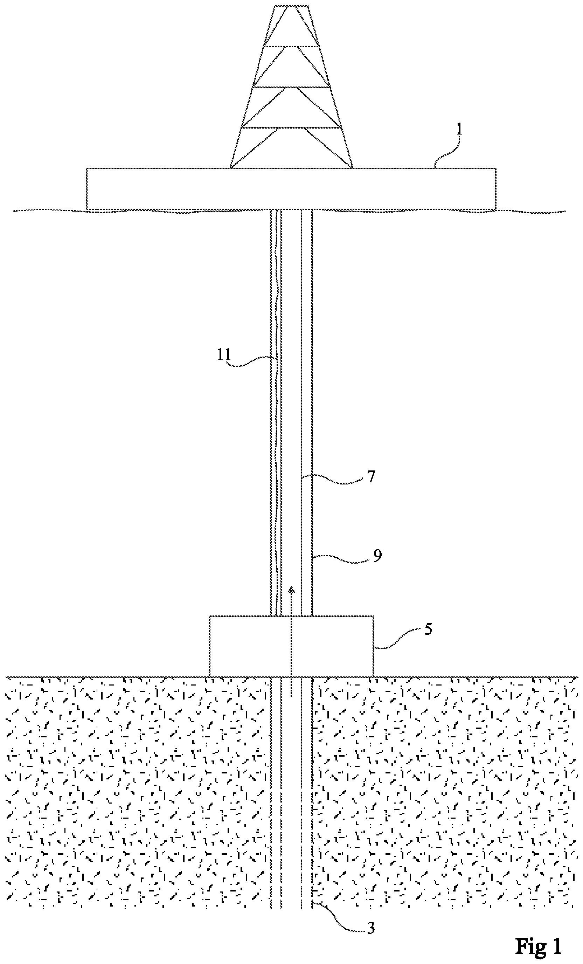

La figure 1 représente de façon très schématique un exemple d'une installation d'extraction pétrolière en milieu marin. Cette installation comprend une plate-forme flottante 1 située à la surface de la mer, à l'aplomb d'un puits 3 foré depuis le fond sous-marin et débouchant dans la réserve de pétrole à extraire (non représentée). Un système de pompage immergé 5 repose sur le fond sous-marin au niveau de l'ouverture du puits 3. Le système de pompage 5 est adapté à extraire le pétrole du puits 3. L'installation comprend en outre un tuyau 7 s'étendant entre le système de pompage 5 et la plate-forme 1, destiné à acheminer vers la plate-forme 1 le pétrole extrait du puits 3. Le tuyau 7 est lui-même disposé dans un tube de protection 9 s'étendant également entre le système de pompage 5 et la plate-forme 1. L'espace entre la paroi intérieure du tube 9 et la paroi extérieure du tuyau 7 peut contenir des câbles 11 reliant le système de pompage 5 à la plate-forme 1, par exemple des câbles électriques d'alimentation du système de pompage 5.

Pendant l'exploitation, un mélange d'eau, de boue, de pétrole, etc., peut remonter depuis le puits 3, à l'intérieur de l'espace situé entre le tuyau 7 d'acheminement du pétrole et le tube de protection 9. Ce mélange peut contenir des substances corrosives telles que du dioxyde de carbone (CO₂) ou du sulfure d'hydrogène (H₂S). Ces substances sont susceptibles de dégrader les câbles 11 reliant le système de pompage 5 à la plate-forme 1. La présence de ces substances est difficile à anticiper car ces dernières proviennent généralement de l'intérieur de la réserve de pétrole, et on ne sait pas toujours à l'avance si cette dernière contient ces substances et en quelles quantités.

Il existe donc un besoin pour un dispositif permettant de détecter in-situ la présence d'une ou plusieurs substances corrosives à l'intérieur du tube 9, afin par exemple de pouvoir interrompre l'extraction et remplacer les câbles 11 lorsqu'une concentration excessive d'une telle substance est détectée. On notera que les substances que l'on cherche à détecter sont généralement sous forme gazeuse dans les conditions de pression et de température usuellement rencontrées à la surface de la mer, mais peuvent se trouver sous forme liquide dans les conditions de pression et de température rencontrées dans la partie inférieure du tube 9.

Le document intitulé "Distributed Fiber Optic Gas Sensing for Harsh Environment" de Juntao Wu (www.osti.gov/scitech/servlets/purl/938805) décrit un dispositif distribué de détection de gaz comportant une fibre optique dont une partie de la gaine est modifiée pour réagir avec le gaz à détecter. La concentration du gaz est mesurée indirectement à travers la modification des propriétés optiques de la fibre. Un inconvénient de ce dispositif est que la modification des propriétés optiques de la fibre est irréversible, ce qui implique que la mesure ne peut être effectuée qu'une seule fois. De plus, avec cette méthode, il est difficile de mesurer la concentration de plusieurs substances distinctes au moyen d'une même fibre.

Le document intitulé "Gas détection with micro- and nano-engineered optical fibers" de W. Jin et al. (Optical Fiber Technology, Volume 19, Issue 6, Part B, December 2013, Pages 741-759), décrit diverses solutions techniques pour la détection de gaz. La plupart de ces solutions sont non distribuées, et ne permettent pas de surveiller des zones étendues. Les solutions distribuées décrites dans cet article (section 4 de l'article) sont basées sur l'analyse spectroscopique directe d'un faisceau lumineux interagissant avec le gaz sous surveillance. Ces solutions nécessitent d'utiliser des fibres optiques présentant des structures complexes, pour permettre à une partie de la lumière se propageant dans la fibre d'interagir avec le gaz puis de réintégrer la fibre, de façon qu'un signal réfléchi ou rétrodiffusé puisse être analysé à l'entrée de la fibre. Plus particulièrement, les solutions distribuées décrites par W. Jin et al. utilisent soit des fibres optiques de type HC-PBGF (de l'anglais "Hollow-core photonic bandgap fibers"), c'est-à-dire des fibres dont le coeur est discontinu, le gaz à analyser étant placé sur le trajet de la lumière entre les tronçons successifs du coeur, soit des fibres optiques de type SCF (de l'anglais "Suspended Core Fiber"), c'est-à-dire des fibres dont le coeur est suspendu dans une cavité remplie du gaz à analyser. L'article de W. Jin et al. mentionne par ailleurs des solutions basées sur les principes de la détection photo-acoustique. L'article ne détaille toutefois pas de solution photo-acoustique distribuée, permettant de surveiller des zones étendues.

Les documents US2011/026031, GB2522266, US2014/180070 et US6535667 et l'article "Evanescent-wave photoacoustic spectroscopy with optical micro/nano fibers" (Optics Letters, vol. 37, n°2, pages 214-216 (XP001572686)) décrivent d'autres exemples de dispositifs permettant de détecter la présence d'une substance dans un conduit.

### Résumé

La présente invention a ainsi pour objet un dispositif distribué d'une substance selon la revendication 1, comportant une source d'excitation optique distribuée comportant une première fibre optique munie d'une pluralité de régions d'extraction, chaque région d'extraction étant adaptée à extraire de la première fibre optique une partie de la lumière véhiculée par cette fibre ; et un détecteur acoustique distribué comportant une deuxième fibre optique.

La source d'excitation optique distribuée comprend une première source lumineuse adaptée à injecter dans la première fibre optique un signal lumineux à une longueur d'onde d'absorption prédéterminée de la substance à détecter.

Le dispositif de détection comporte un circuit de contrôle adapté à moduler ledit signal lumineux en intensité à une fréquence acoustique.

Selon un mode de réalisation, la première source lumineuse est ajustable en longueur d'onde.

Le détecteur acoustique distribué comprend une deuxième source lumineuse adaptée à injecter un signal lumineux dans la deuxième fibre optique, et un détecteur optique adapté à mesurer un signal lumineux rétrodiffusé dans la deuxième fibre optique.

Selon un mode de réalisation, la deuxième fibre optique comprend une pluralité de régions de mesure comportant chacune un miroir de Bragg placé sur le chemin de la lumière véhiculée par la deuxième fibre optique.

Selon un mode de réalisation, les première et deuxième fibres optiques sont confondues.

Selon l'invention, les première et deuxième fibres optiques sont disposées dans un support, ce support définissant une cavité tubulaire s'étendant sur sensiblement toute la longueur des première et deuxième fibres optiques, ladite cavité étant adaptée à confiner un échantillon d'un fluide dans lequel on souhaite détecter la présence éventuelle de ladite substance.

Selon un mode de réalisation, la cavité est reliée à un environnement extérieur par une pluralité d'orifices formés dans le support.

Selon un mode de réalisation, la première fibre optique est située dans ladite cavité.

Selon l'invention, la cavité comprend une pluralité de zones de pincement ou de rétrécissement réparties sur toute sa longueur.

Selon un mode de réalisation, la substance à détecter est le dioxyde de carbone (CO₂) ou le sulfure d'hydrogène (H₂S).

### Brève description des dessins

Ces caractéristiques et leurs avantages, ainsi que d'autres, seront exposés en détail dans la description suivante de modes de réalisation particuliers faite à titre non limitatif en relation avec les figures jointes parmi lesquelles :
la figure 1, précédemment décrite, illustre schématiquement un exemple d'une installation d'extraction pétrolière ;
la figure 2 est une vue en coupe schématique d'un exemple d'un mode de réalisation d'un dispositif distribué de détection d'une substance ;
la figure 3 est une vue en coupe schématique d'une variante de réalisation du dispositif de la figure 2 ;
la figure 4 est une vue en coupe schématique d'une autre variante de réalisation du dispositif de la figure 2 ;
la figure 5 est une vue en perspective schématique et partielle d'un exemple d'agencement des fibres optiques d'un dispositif du type décrit en relation avec les figures 2, 3 et 4 ; et
la figure 6 est une vue en coupe longitudinale schématique et partielle illustrant une variante de réalisation du dispositif de la figure 5.

### Description détaillée

De mêmes éléments ont été désignés par de mêmes références aux différentes figures et, de plus, les diverses figures ne sont pas tracées à l'échelle. Par souci de clarté, seuls les éléments qui sont utiles à la compréhension des modes de réalisation décrits ont été représentés et sont détaillés. Sauf précision contraire, les expressions "approximativement", "sensiblement", et "de l'ordre de" signifient à 10 % près, de préférence à 5 % près.

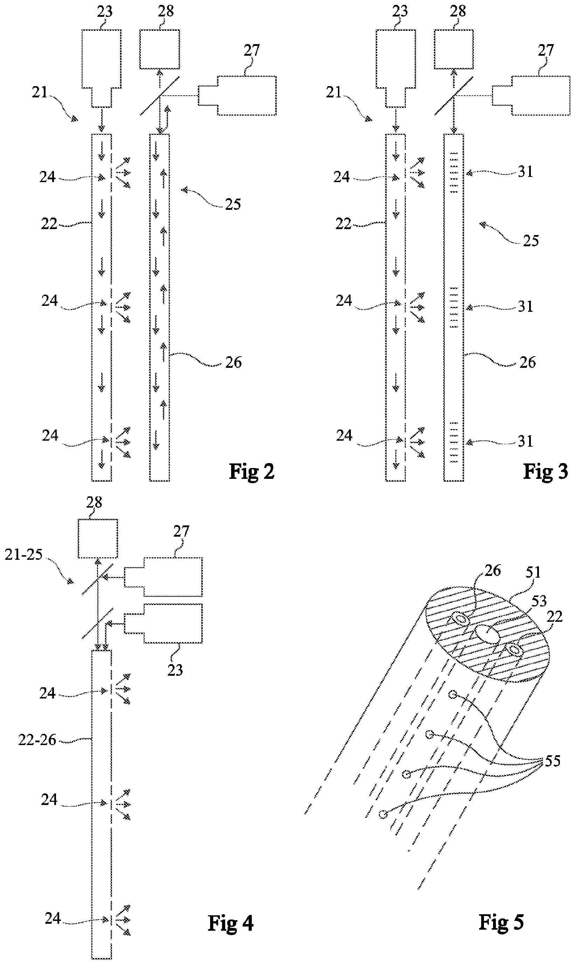

La figure 2 est une vue en coupe schématique d'un exemple d'un mode de réalisation d'un dispositif distribué de détection d'une substance.

Le dispositif de la figure 2 comprend une source distribuée d'excitation optique 21. La source distribuée 21 comprend une fibre optique 22, et une source lumineuse 23, par exemple une source laser, couplée à une extrémité proximale de la fibre optique 22 de manière à pouvoir injecter de la lumière dans la fibre 22. La fibre optique 22 comprend une pluralité de régions d'extraction 24, par exemple régulièrement réparties sur toute la longueur de la fibre. Chaque région d'extraction 24 est adaptée à extraire de la fibre 22 une partie de la lumière véhiculée par la fibre. A titre d'exemple, la fibre 22 comprend un coeur (non détaillé sur la figure) en un matériau transparent d'un premier indice de réfraction, une gaine (non détaillée sur la figure) en un matériau transparent d'un deuxième indice de réfraction revêtant le coeur, et un revêtement de protection (non détaillé sur la figure) entourant la gaine. Le coeur, la gaine et le revêtement de protection sont par exemple en des matériaux solides dans les conditions normales d'utilisation de la fibre. La gaine est par exemple en contact avec le coeur sur toute sa périphérie et sur toute la longueur de la fibre. La fibre 22 est par exemple continue, c'est-à-dire que son coeur est ininterrompu sur toute la longueur de la fibre. Chaque région d'extraction 24 correspond par exemple à une portion de la fibre 22 comprenant des micro-structurations, par exemple formées sur la gaine de la fibre, provoquant l'extraction vers l'extérieur de la fibre d'une partie de la lumière véhiculée par la fibre. Ces micro-structurations sont par exemple des micro-structurations désordonnées conduisant à diffuser dans toutes les directions une partie de la lumière véhiculée par la fibre, ou des micro-structurations ordonnées définissant un réseau de diffraction adapté à dévier selon un angle déterminé une partie de la lumière véhiculée par la fibre. Dans le cas où le revêtement de protection de la fibre est opaque, ce dernier peut être retiré au niveau des régions d'extraction 24. Si le matériau de protection de la fibre est transparent pour la longueur d'onde émise par la source, celui-ci peut être conservé au niveau des régions d'extraction 24. Les régions d'extraction 24 sont par exemple dimensionnées de façon que, pour une puissance d'émission donnée de la source lumineuse 23, le flux lumineux émis à l'extérieur de la fibre 22 au niveau de chacune des régions d'extraction 24 ait sensiblement la même intensité.

Le dispositif de la figure 2 comprend en outre un détecteur acoustique distribué 25. Le détecteur acoustique 25 comprend une fibre optique 26, et une source lumineuse 27, par exemple une source laser, couplée à une extrémité proximale de la fibre optique 26 de manière à pouvoir injecter de la lumière dans la fibre 26. Le détecteur acoustique distribué 25 comprend en outre un détecteur optique 28 couplé à l'extrémité proximale de la fibre optique 26. Le fonctionnement du détecteur acoustique distribué 25 est le suivant. La source lumineuse 27 émet des impulsions lumineuses dans la fibre 26 via son extrémité proximale. Lorsque la lumière se propage le long de la fibre 26 en direction de son extrémité distale, la lumière interagit au niveau moléculaire avec le matériau constituant le coeur de la fibre. Il en résulte qu'une partie de la lumière est rétrodiffusée et renvoyée vers l'extrémité proximale de la fibre. La lumière rétrodiffusée est détectée et analysée par le détecteur optique 28. Lorsque des vibrations acoustiques interagissent avec les matériaux de la fibre optique 26, ces derniers subissent de légers changements d'indice de réfraction. Ces changements affectent les caractéristiques de la lumière rétrodiffusée, ce qui permet de mesurer et de localiser (par des mesures de temps de vol) les vibrations acoustiques. Le détecteur acoustique distribué 25 ne sera pas décrit plus en détail ci-après, les modes de réalisation décrits étant compatibles avec la plupart des détecteurs acoustiques distribués à fibre optique connus. Des exemples de tels détecteurs sont par exemple décrits dans la demande de brevet WO2015/094180. De tels détecteurs sont en outre disponibles dans le commerce, par exemple les détecteurs proposés par les sociétés OFS (http://www.ofsoptics.com/oil-gas-distributed-acoustic-sensing.html) et SILIXA (http://silixa.com/technology/idas/).

Le fonctionnement du dispositif distribué de détection de substance de la figure 2 est le suivant.

Les fibres optiques 22 de la source d'excitation lumineuse distribuée 21 et 26 du détecteur acoustique distribué 25 sont toutes deux placées dans la zone que l'on souhaite surveiller, par exemple dans l'espace entre le tuyau d'extraction de pétrole 7 et le tube de protection 9 dans l'installation de la figure 1. La fibre optique 22 est disposée de façon à ce que le flux lumineux émis par les régions d'extraction 24 éclaire le milieu à surveiller, c'est-à-dire le milieu susceptible de contenir la substance à détecter. La longueur de la fibre optique 22 est par exemple sensiblement identique à la longueur de la fibre optique 26, par exemple comprise entre 50 m et 50 km. Les fibres optiques 22 et 26 sont par exemple assemblées de façon à ce que la distance entre la fibre 22 et la fibre 26 soit sensiblement constante sur toute la longueur des fibres.

Une fois les fibres optiques 22 et 26 en place, la source lumineuse 23 est commandée par un circuit de contrôle (non visible sur les figures) pour injecter dans la fibre optique 22 un flux lumineux à une longueur d'onde d'absorption ou longueur d'onde de résonance de la substance que l'on cherche à détecter. Ainsi, au niveau de chacune des régions d'extraction 24 de la fibre optique 22, le milieu sous surveillance est éclairé à une longueur d'onde d'absorption de la substance à détecter. L'intensité lumineuse émise par la source 23 est modulée à une fréquence acoustique, par exemple une fréquence comprise entre 1 Hz et 50 kHz. Le dispositif de la figure 2 fonctionne selon le principe de la détection photo-acoustique. Lorsque la substance que l'on cherche à détecter est présente au niveau de l'une des régions d'extraction 24 de la fibre optique 22 et se trouve éclairée par le flux lumineux de sortie de la fibre 22, l'absorption de la lumière par cette substance se traduit par l'émission d'une onde acoustique à la fréquence de modulation de la source lumineuse 23. Cette onde acoustique est détectée et localisée par le dispositif de détection acoustique distribué 25, ce qui permet de détecter et de localiser la substance recherchée. Pour garantir le bon fonctionnement du dispositif, on veillera à ce que la fréquence de modulation de la source lumineuse 23 soit comprise dans la gamme des fréquences acoustiques détectables par le dispositif de détection acoustique 25. De plus, cette fréquence sera de préférence choisie éloignée des fréquences acoustiques habituellement présentes dans l'environnement considéré, qui pourraient perturber la mesure. Le nombre et la répartition des régions d'extraction lumineuse 24 le long de la fibre optique 22 peuvent être choisis librement en fonction de la résolution de détection souhaitée. La source lumineuse 23 est par exemple choisie ajustable en longueur d'onde, de façon à pouvoir détecter successivement plusieurs substances distinctes présentant des longueurs d'ondes d'absorption distinctes, ou pour pouvoir détecter une substance unique avec des risques de fausses détection limités, en répétant plusieurs fois la mesure à plusieurs longueurs d'onde d'excitation optique distinctes. A titre d'exemple, la source lumineuse 23 est ajustable en longueur d'onde entre 1 et 10 µm. La source 23 comprend par exemple un ou plusieurs lasers.

Un avantage du dispositif de la figure 2 est qu'il permet de détecter la présence d'une ou plusieurs substances gazeuses ou liquides sur des distances très importantes, typiquement de plusieurs dizaines de mètres à plusieurs dizaines de kilomètres, y compris dans des environnements difficiles, les fibres optiques étant résistantes à des températures et à des pressions élevées. Plus particulièrement, un avantage est que plusieurs zones de mesure distinctes peuvent être excitées optiquement au moyen d'une unique fibre optique (la fibre 22), les ondes acoustiques générées dans ces différentes zones de mesure par effet photo-acoustique étant mesurées au moyen d'une fibre optique unique (la fibre 26).

Un autre avantage de ce dispositif est que son comportement n'est pas irréversiblement modifié lorsqu'il est mis en contact avec la ou les substances recherchées.

Un autre avantage du dispositif de la figure 2 est que le choix de la substance à détecter peut aisément être effectué en ajustant la longueur d'onde d'émission de la source lumineuse 23.

La figure 3 est une vue en coupe schématique d'une variante de réalisation du dispositif de la figure 2. Cette variante diffère de l'exemple de la figure 2 principalement par la structure de son détecteur acoustique distribué 25.

Dans l'exemple de la figure 3, la fibre optique 26 du détecteur acoustique distribué 25 comprend une pluralité de régions de mesure 31, par exemple régulièrement distribuées sur toute la longueur de la fibre. Chaque région de mesure 31 comprend un miroir de Bragg placé sur le trajet de la lumière véhiculée par la fibre 26. En présence d'une vibration acoustique au niveau d'une région de mesure 31, les propriétés de transmission / réflexion de la lumière par le miroir de Bragg sont modifiées, ce qui permet, par l'analyse des signaux optiques reçus par le détecteur 28, de mesurer et localiser la vibration acoustique. Ainsi, le détecteur acoustique 25 de la figure réalise une mesure acoustique "discrète", c'est-à-dire en des zones de mesure définies réparties le long de la fibre optique 26, et non une mesure "continue" comme dans l'exemple de la figure 2. Les régions de mesure 31 du détecteur acoustique 25 sont de préférence alignées avec les régions d'extraction lumineuse 24 du dispositif d'excitation optique 21, comme cela a été représenté sur la figure 3. En pratique (et contrairement à ce qui est représenté sur la figure), les dimensions (dans la direction longitudinale des fibres) des régions d'extraction lumineuse 24 du dispositif d'excitation optique 21 et des régions de mesure 31 du détecteur acoustique 25 peuvent être différentes. Pour obtenir une bonne sensibilité de détection, les régions de mesure 31 sont de préférence plus étendues que les régions d'extraction lumineuse 24.

La figure 4 est une vue en coupe schématique d'une autre variante de réalisation du dispositif de la figure 2.

Dans l'exemple de la figure 4, les fibres optiques 22 du dispositif d'excitation optique 21, et 26 du dispositif de détection acoustique 25, sont confondues. La source lumineuse 23 du dispositif d'excitation optique 21 et la source lumineuse 27 du dispositif de détection acoustique 25 sont toutes les deux couplées à l'extrémité proximale de la fibre optique 22-26, de même que le détecteur optique 28 du dispositif de détection acoustique 25. A titre d'exemple, la longueur d'onde d'émission de la source lumineuse 23 est différente de la longueur d'onde d'émission de la source lumineuse 27, et les régions d'extraction lumineuse 24 de la fibre optique 22-26 sont dimensionnées pour dévier vers l'extérieur de la fibre une partie de la lumière émise par la source lumineuse 23, mais transmettre sans modification substantielle la lumière émise par la source lumineuse 27.

La variante de réalisation de la figure 4 peut être adaptée au cas où le détecteur acoustique 25 est du type décrit en relation avec la figure 3, c'est-à-dire comportant une pluralité de régions de mesure 31 discrètes distribuées le long de la fibre optique. Dans ce cas, chaque région de mesure 31 peut être disposée au voisinage d'une région d'extraction lumineuse 24. Les régions de mesure 31 du dispositif de détection acoustique 25 sont par exemple dimensionnées pour transmettre sans modification substantielle la lumière émise par la source lumineuse 23 du dispositif d'excitation optique 25.

La figure 5 est une vue en perspective schématique et partielle d'un exemple d'agencement des fibres optiques 22 et 26 d'un dispositif distribué de détection de substance du type décrit ci-dessus. Plus particulièrement, l'exemple représenté sur la figure 5 correspond à un dispositif du type décrit en relation avec les figures 2 et 3, c'est-à-dire comportant deux fibres optiques 22 et 26 distinctes pour mettre en oeuvre respectivement la fonction d'excitation optique du milieu sous surveillance et la fonction de détection acoustique. L'agencement de la figure 5 peut toutefois aisément être adapté à un dispositif du type décrit en relation avec la figure 4, dans lequel les fibres optiques 22 et 26 sont confondues.

Dans l'exemple de la figure 5, les fibres optiques 22 et 26 sont disposées dans une même gaine ou support 51 fixant le positionnement relatif de la fibre 22 par rapport à la fibre 26. La gaine 51 comprend en outre une cavité tubulaire 53 s'étendant sur toute sa longueur, parallèlement aux fibres optiques 22 et 26, dont le positionnement est également fixe par rapport aux fibres optiques 22 et 26. La cavité 53 est positionnée de façon à être éclairée par la lumière émise depuis les régions d'extraction 24 de la fibre optique 22. Dans l'exemple représenté, les fibres optiques 22, 26 et la cavité 53 sont toutes trois en contact sur toute leur périphérie avec le matériau de la gaine 51. Dans cet exemple, le matériau de la gaine 51 est un matériau transparent pour la longueur d'onde émise par la source lumineuse 23. La cavité 53 est par exemple disposée entre les fibres 22 et 26. Dans cet exemple, la gaine 51 comprend une pluralité d'orifices 55, reliant la cavité 53 à l'environnement extérieur. Les orifices 55 sont par exemple régulièrement répartis sur toute la longueur de la cavité 53. La paroi interne de la cavité 53 peut être recouverte (excepté en regard des régions d'extraction lumineuses 24 de la fibre optique 22) d'une couche réfléchissante pour la lumière d'excitation de la source lumineuse 23, de façon à augmenter l'absorption de la lumière par la substance à détecter et ainsi augmenter l'intensité de l'onde acoustique générée.

Lorsque la gaine 51 est mise en place dans le milieu à surveiller, les fluides (liquides et/ou gaz) du milieu extérieur pénètrent dans la cavité 53 par l'intermédiaire des orifices 55 et remplissent la cavité 53. La présence éventuelle de la ou des substances recherchées dans la cavité 53 est alors détectée par analyse photo-acoustique selon le fonctionnement décrit ci-dessus.

Un avantage de l'agencement de la figure 5 est que les fluides analysés sont confinés dans la cavité 53, ce qui facilite la mise en oeuvre de l'analyse photo-acoustique.

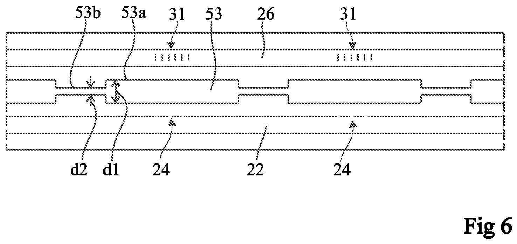

Comme illustré par la vue en coupe longitudinale de la figure 6, pour améliorer encore le confinement du fluide analysé dans la cavité 53, cette dernière peut comporter, dans la direction longitudinale du dispositif, une succession de zones alternées 53a et 53b, les zones 53a présentant une première largeur ou un premier diamètre d1, et les zones 53b étant des zones de pincement ou de rétrécissement de largeur ou de diamètre d2 inférieur à d1 séparant deux à deux les zones 53a. Chaque zone 53a de diamètre d1 forme une chambre d'analyse fluidique et est disposée en regard d'une ou plusieurs régions d'extraction lumineuse 24 du dispositif d'excitation optique 21. Dans le cas où le détecteur acoustique 25 est un détecteur à zones de mesure discrètes du type décrit en relation avec la figure 3, chaque zone 53a est en outre disposée en regard d'une ou plusieurs régions de mesure 31 du détecteur acoustique 25. Chaque zone d'analyse 53a est par exemple directement reliée à l'environnement extérieur par des orifices 55 (non visibles sur la figure 6) formés dans la gaine 51. Le diamètre d2 des zones de pincement 53b peut éventuellement être nul, auquel cas la cavité 53 est discontinue.

A titre de variante, la fibre optique 22 du dispositif d'excitation optique peut être placée directement dans la cavité 53, auquel cas le matériau de la gaine 51 peut être opaque à la longueur d'onde d'émission de la source lumineuse 23.

Des modes de réalisation particuliers ont été décrits. Diverses variantes et modifications apparaîtront à l'homme de l'art. En particulier, les modes de réalisation décrits ne se limitent pas aux exemples d'agencement des fibres optiques 22 et 26 décrits en relation avec les figures 5 et 6.

En outre, les modes de réalisation décrits ne se limitent pas à l'exemple d'application susmentionné à la détection de substances corrosives dans des installations d'extraction pétrolière. Plus généralement, les modes de réalisation décrits peuvent être adaptés à toute application dans laquelle on souhaite pouvoir détecter la présence d'une ou plusieurs substances spécifiques, liquides ou gazeuses, dans une zone étendue.

## Revendications

1. Dispositif distribué de détection d'une substance, comportant :
une source d'excitation optique distribuée (21) comportant :
- une première fibre optique (22) munie d'une pluralité de régions d'extraction (24), chaque région d'extraction (24) étant adaptée à extraire de la première fibre optique (22) une partie de la lumière véhiculée par cette fibre ;
- une première source lumineuse (23) adaptée à injecter dans la première fibre optique (22) un premier signal lumineux à une longueur d'onde d'absorption de la substance à détecter ; et
- un circuit de contrôle adapté à moduler le premier signal lumineux en intensité à une fréquence acoustique ;
un détecteur acoustique distribué (25) comportant :
- une deuxième fibre optique (26) ;
- une deuxième source lumineuse (27) adaptée à injecter un deuxième signal lumineux dans la deuxième fibre optique (26) ; et
- un détecteur optique (28) adapté à mesurer un troisième signal lumineux rétrodiffusé dans la deuxième fibre optique (26) de façon à détecter et localiser une vibration acoustique à la fréquence de modulation du premier signal lumineux ; et
un support (51) dans lequel sont disposées les première (22) et deuxième (26) fibres optiques, ce support (51) définissant une cavité tubulaire (53) s'étendant sur sensiblement toute la longueur des première (22) et deuxième (26) fibres optiques, ladite cavité étant adaptée à confiner un échantillon d'un fluide dans lequel on souhaite détecter la présence éventuelle de ladite substance,
dans lequel ladite cavité (53) comprend une pluralité de zones de pincement ou de rétrécissement (53b) réparties sur toute sa longueur.

2. Dispositif selon la revendication 1, dans lequel les première (22) et deuxième (26) fibres optiques sont destinées à être placées dans une zone dans laquelle on cherche à détecter la présence de ladite substance.

3. Dispositif selon la revendication 1 ou 2, dans lequel la première source lumineuse (23) est ajustable en longueur d'onde.

4. Dispositif selon l'une quelconque des revendications 1 à 3, dans lequel la deuxième fibre optique (26) comprend une pluralité de régions de mesure (31) comportant chacune un miroir de Bragg placé sur le chemin de la lumière véhiculée par la deuxième fibre optique (26).

5. Dispositif selon l'une quelconque des revendications 1 à 4, dans lequel les première (22) et deuxième (26) fibres optiques sont confondues.

6. Dispositif selon l'une quelconque des revendications 1 à 5, dans lequel ladite cavité (53) est reliée à un environnement extérieur par une pluralité d'orifices (55) formés dans le support (51) .

7. Dispositif selon l'une quelconque des revendications 1 à 6, dans lequel la première fibre optique (22) est située dans ladite cavité (53).

8. Dispositif selon l'une quelconque des revendications 1 à 7, dans lequel ladite substance à détecter est le dioxyde de carbone (CO₂) ou le sulfure d'hydrogène (H₂S).

9. Dispositif selon l'une quelconque des revendications 1 à 8, dans lequel la première fibre optique (22) comprend un coeur en un matériau transparent d'un premier indice de réfraction et une gaine en un matériau transparent d'un deuxième indice de réfraction, chaque région d'extraction (24) correspondant à une portion de la première fibre (22) comprenant des micro-structurations formées sur la gaine de la fibre, adaptées à provoquer l'extraction, vers l'extérieur de la première fibre, d'une partie de la lumière véhiculée par la fibre.

10. Dispositif selon la revendication 9, dans lequel les micro-structurations sont des micro-structurations désordonnées adaptées à diffuser dans toutes les directions une partie de la lumière véhiculée par la première fibre.

11. Dispositif selon la revendication 9, dans lequel les micro-structurations sont des micro-structurations ordonnées définissant un réseau de diffraction adapté à dévier selon un angle déterminé une partie de la lumière véhiculée par la première fibre.

12. Dispositif selon l'une quelconque des revendications 1 à 11, dans lequel les régions d'extraction (24) sont dimensionnées de façon que, pour une puissance d'émission donnée de la première source lumineuse (23), le flux lumineux émis à l'extérieur de la première fibre (22) au niveau de chacune des régions d'extraction (24) ait sensiblement la même intensité.

## Patentansprüche

1. Eine Vorrichtung zum Nachweis verteilter Substanzen, umfassend:
eine verteilte optische Anregungsquelle (21), umfassend:
- eine erste optische Faser (22), die mit einer Vielzahl von Extraktionsbereichen (24) versehen ist, wobei jeder Extraktionsbereich (24) in der Lage ist, aus der ersten optischen Faser (22) einen Teil des durch die Faser geleiteten Lichts zu extrahieren;
- eine erste Lichtquelle (23), die in der Lage ist, in die erste Glasfaser (22) ein erstes Lichtsignal bei einer Absorptionswellenlänge der zu erfassenden Substanz einzuspeisen; und
- eine Steuerschaltung, die in der Lage ist, das erste Lichtsignal in seiner Intensität bei einer akustischen Frequenz zu modulieren;
einen verteilten akustischen Detektor (25), der umfasst:
- eine zweite optische Faser (26);
- eine zweite Lichtquelle (27), die in der Lage ist, ein zweites Lichtsignal in die zweite optische Faser (26) einzuspeisen; und
- einen optischen Detektor (28), der in der Lage ist, ein drittes rückgestreutes Lichtsignal in der zweiten optischen Faser (26) zu detektieren, um eine akustische Vibration bei der Modulationsfrequenz des ersten Lichtsignals zu erfassen und zu lokalisieren; und
einen Träger (51) mit der ersten (22) und zweiten (26) optischen Faser, wobei der Träger (51) einen rohrförmigen Hohlraum (53) definiert, der sich im Wesentlichen über die gesamte Länge der ersten (22) und zweiten (26) optischen Faser erstreckt, wobei der Hohlraum in der Lage ist, eine Probe eines Fluids zu begrenzen, wenn das mögliche Vorhandensein der Substanz nachgewiesen werden soll,
wobei der Hohlraum (53) eine Vielzahl von Klemm- oder Halsbereichen (53b) umfasst, die über seine gesamte Länge verteilt sind.

2. Die Vorrichtung nach Anspruch 1, wobei die ersten (22) und zweiten (26) optischen Fasern dazu bestimmt sind, in einem Bereich platziert zu werden, in dem das Vorhandensein der Substanz nachgewiesen werden soll.

3. Die Vorrichtung nach Anspruch 1 oder 2, wobei die erste Lichtquelle (23) eine einstellbare Wellenlänge aufweist.

4. Die Vorrichtung nach einem der Ansprüche 1 bis 3, wobei die zweite optische Faser (26) eine Vielzahl von Messbereichen (31) umfasst, die jeweils einen Bragg-Spiegel umfassen, der auf dem Weg des durch die zweite optische Faser (26) geleiteten Lichts angeordnet ist.

5. Die Vorrichtung nach einem der Ansprüche 1 bis 4, wobei die ersten (22) und zweiten (26) optischen Fasern vertauscht sind.

6. Die Vorrichtung nach einem der Ansprüche 1 bis 5, wobei der Hohlraum (53) mit einer äußeren Umgebung durch eine Vielzahl von Öffnungen (55) gekoppelt ist, die in dem Träger (51) ausgebildet sind.

7. Die Vorrichtung nach einem der Ansprüche 1 bis 6, wobei die erste optische Faser (22) in dem Hohlraum (53) angeordnet ist.

8. Die Vorrichtung nach einem der Ansprüche 1 bis 7, wobei die zu erfassende Substanz Kohlendioxid (CO₂) oder Schwefelwasserstoff (H₂S) ist.

9. Die Vorrichtung nach einem der Ansprüche 1 bis 8, wobei die erste optische Faser (22) einen Kern aus einem transparenten Material mit einem ersten Brechungsindex und eine Hülle aus einem transparenten Material mit einem zweiten Brechungsindex umfasst, wobei jeder Extraktionsbereich (24) einem Abschnitt der ersten Faser (22) entspricht, der Mikrostrukturen umfasst, die auf der Hülle der Faser gebildet sind, die in der Lage sind, die Extraktion eines Teils des durch die Faser geleiteten Lichts nach außerhalb der ersten Faser zu bewirken.

10. Die Vorrichtung nach Anspruch 9, wobei die Mikrostrukturen ungeordnete Mikrostrukturen sind, die in der Lage sind, einen Teil des von der ersten Faser geleiteten Lichts in alle Richtungen zu streuen.

11. Die Vorrichtung nach Anspruch 9, wobei die Mikrostrukturen geordnete Mikrostrukturen sind, die ein Beugungsgitter definieren, das gemäß einem bestimmten Winkelteil des von der ersten Faser geleiteten Lichts abweichen kann.

12. Die Vorrichtung nach einem der Ansprüche 1 bis 11, wobei die Extraktionsbereiche (24) so bemessen sind, dass für eine gegebene Emissionsleistung der ersten Lichtquelle (23) der außerhalb der ersten Faser (22) emittierte Lichtstrom auf dem Niveau jedes der Extraktionsbereiche (24) im Wesentlichen die gleiche Intensität aufweist.

## Claims

1. A distributed substance detection device, comprising:
a distributed optical excitation source (21) comprising:
- a first optical fiber (22) provided with a plurality of extraction regions (24), each extraction region (24) being capable of extracting from the first optical fiber (22) part of the light conveyed by the fiber;
- a first light source (23) capable of injecting into the first optical fiber (22) a first light signal at an absorption wavelength of the substance to be detected; and
- a control circuit capable of modulating the first light signal in intensity at an acoustic frequency;
a distributed acoustic detector (25) comprising:
- a second optical fiber (26);
- a second light source (27) capable of injecting a second light signal into the second optical fiber (26); and
- an optical detector (28) capable of measuring a third backscattered light signal in the second optical fiber (26) to detect and locate an acoustic vibration at the modulation frequency of the first light signal; and
a support (51) having the first (22) and second (26) optical fibers arranged therein, the support (51) defining a tubular cavity (53) extending along substantially the entire length of the first (22) and second (26) optical fibers, said cavity being capable of confining a sample of a fluid where the possible presence of said substance is desired to be detected,
wherein said cavity (53) comprises a plurality of nip or throat areas (53b) distributed all along its length.

2. The device of claim 1, wherein the first (22) and second (26) optical fibers are intended to be placed in an area where the presence of said substance is desired to be detected.

3. The device of claim 1 or 2, wherein the first light source (23) has an adjustable wavelength.

4. The device of any of claims 1 to 3, wherein the second optical fiber (26) comprises a plurality of measurement regions (31) each comprising a Bragg mirror placed on the path of the light conveyed by the second optical fiber (26).

5. The device of any of claims 1 to 4, wherein the first (22) and second (26) optical fibers are confounded.

6. The device of any of claims 1 to 5, wherein said cavity (53) is coupled to an outer environment by a plurality of openings (55) formed in the support (51).

7. The device of any of claims 1 to 6, wherein the first optical fiber (22) is located in said cavity (53).

8. The device of any of claims 1 to 7, wherein said substance to be detected is carbon dioxide (CO₂) or hydrogen sulfide (H₂S).

9. The device of any of claims 1 to 8, wherein the first optical fiber (22) comprises a core made of a transparent material having a first refraction index and a sheath made of a transparent material having a second refraction index, each extraction region (24) corresponding to a portion of the first fiber (22) comprising microstructures formed on the sheath of the fiber, capable of causing the extraction, to the outside of the first fiber, of part of the light conveyed by the fiber.

10. The device of claim 9, wherein the microstructures are disordered microstructures capable of diffusing in all directions part of the light conveyed by the first fiber.

11. The device of claim 9, wherein the microstructures are ordered microstructures defining a diffraction grating capable of deviating according to a determined angle part of the light conveyed by the first fiber.

12. The device of any of claims 1 to 11, wherein the extraction regions (24) are sized so that, for a given emission power of the first light source (23), the light flow emitted outside of the first fiber (22) at the level of each of the extraction regions (24) has substantially the same intensity.
